# EUROPÄISCHE PATENTSCHRIFT

(11) **EP 0 404 058 B1**
(45) Veröffentlichungstag und Bekanntmachung des Hinweises auf die Patenterteilung: **02.11.1994**
(21) Anmeldenummer: 90111558.4
(22) Anmeldetag: 19.06.1990
(51) Int. Cl.: A23C 11/04, A23D 9/00, A23L 1/30

(54) **Fettmischung, Verfahren zu deren Herstellung und deren Verwendung**
Fat mixture, process for its preparation and its use
Mélange gras, procédé pour sa préparation et son application

(30) Priorität: 23.06.1989 DE 3920679
(43) Veröffentlichungstag der Anmeldung: 27.12.1990
(73) Patentinhaber: MILUPA GmbH & Co. KG, 61381 Friedrichsdorf (DE)
(72) Erfinder: Kohn, Gerhard, Dr., D-6500 Main-Bretzenhein (DE); Sawatzki, Günther, Dr., D-6308 Butzbach (DE); Schweikhardt, Friedrich, Dr., D-6382 Friedrichsdorf 2 (DE)
(74) Vertreter: Jaeger, Klaus, Dr.

(56) Entgegenhaltungen:
- EP-A- 0 140 805
- EP-A- 0 180 786
- EP-A- 0 195 570
- EP-A- 0 231 904
- EP-A- 0 298 293
- EP-A- 0 319 360
- GB-A- 1 446 431
- US-A- 4 670 285

## Beschreibung

Die Erfindung betrifft eine Formelnahrung enthaltend eine Fettmischung auf Basis von für Nahrungsmittelzwecke geeigneten Fetten und Ölen tierischen und pflanzlichen Ursprungs, ein Verfahren zur Herstellung dieser Fettmischung sowie deren Verwendung für die Zubereitung von Säuglings- und Frühgeborenennahrungen.

Es ist bekannt, daß der wachsende Organismus eines Säuglings zur Synthese neuen Zellwandmaterials, insbesondere bei der Entwicklung des Nervensystems und des Gehirns, große Mengen an Cholesterin, Arachidonsäure, Eicosapentaensäure und Docosahexaensäure benötigt. Außerdem stellen die langkettigen polyungesättigten Fettsäuren Arachidon- und Eicosapentaensäure die Ausgangssubstanzen für die physiologisch bedeutsamen Prostaglandine und Leukotriene dar.

Hochungesättigte Polyenfettsäuren werden im menschlichen Organismus durch Kettenverlängerung (Elongation) und Desaturierung aus den essentiellen Fettsäuren Linol- und α-Linolensäure synthetisiert. Durch die Aktivität der δ-6-Desaturase wird Linolsäure zur gamma-Linolensäure desaturiert, die dann nach Elongation zur Di-Homo-Gamma-Linolensäure durch die Aktivität der δ-5-Desaturase zur Arachidonsäure desaturiert wird. Durch die gleichen desaturierenden und elongierenden Enzymsysteme erfolgt die Umsetzung der essentiellen Fettsäure α-Linolensäure zur Eicosapentaensäure. Beim rasch wachsenden Organismus des Säuglings ist die Kapazität der Eigensynthese der hochungesättigen Polyenfettsäuren aus den essentiellen Vorstufen bedingt durch eine Unreife der desaturierenden Enzymsysteme noch stark eingeschränkt.

Herkömmliche Säuglingsnahrungen enthalten im Unterschied zur Frauenmilch nur Spurenanteile an langkettigen polyungesättigten Fettsäuren, maximal jeweils 0,05 bis 0,1 Gew.-%. Außerdem sind in derartigen Säuglingsnahrungen maximal 10 mg Cholesterin pro 100 ml enthalten. Herkömmliche und somit bekannte Säuglingsmilchnahrungen sind daher in ernährungsphysiologischer Hinsicht nicht befriedigend.

Wird nun ein Säugling mit den erforderlichen hoch ungesättigten Polyenfettsäuren unzureichend versorgt, dann führt dies dazu, daß andere verfügbare Fettsäuren, wie z.B. Öl- oder Linolsäure in die Lipide der Zellmembranen eingebaut werden. Dies kann Veränderungen der Eigenschaften der Zellmembran hervorrufen. die zu verminderter Membranstabilität, Fluidität und einer veränderten Aktivität membrangebundener Enzyme führen können.

Um nun einen Säugling mit den erforderlichen Polyenfettsäuren zur versorgen, ist in der nicht vorveröffentlichten europäischen Patentanmeldung Nr. 87 101 310.8 eine Fettmischung beschrieben, welche Docosahexaensäure und Arachidonsäure in einem Verhältnis von 1 : 2,0 bis 1 : 3,0 enthält.

Die US-A 4 670 285 lehrt, unter anderem einer Formelnahrung mindestens eine hoch ungesättigte Fettsäure der w6-Familie mit 20 oder 22 C-Atomen und mindestens 1 hoch ungesättigte Fettsäure der w3-Familie mit 20 oder 22 C-Atomen einzuverleiben. Es handelt sich dabei um eine große Zahl von Fettsäuren. Es ist dort jedoch nicht angegeben, auf welche Fettsäuren es besonders ankommt bzw. welche Fettsäuren miteinander kombiniert werden müßten.

In der EP-A 0 140 805 ist eine künstliche Säuglingsmilchnahrung beschrieben, die langkettigte ungesättigte Fettsäuren enthält, welche ausgewählt sind unter den C20:4w6, C20:3w6 und C22:6w3-Fettsäuren. Diese Fettsäuren sind in einem Placentalipidextrakt enthalten.

Aufgabe der vorliegenden Erfindung ist es, eine Formelnahrung, insbesondere eine Säuglingsnahrung bzw. Säuglingsmilchnahrung bereitzustellen, die im Gegensatz zu den bisher bekannten Formelnahrungen den Bedarf des wachsenden Organismus, beispielsweise eines Säuglings, breiter und physiologisch ausgewogener abdeckt.

Gelöst wird diese Aufgabe durch die im Anspruch 1 beschriebene Formelnahrung. Die erfindungsgemäße Formelnahrung zeichnet sich somit u.a. dadurch aus, daß sie eine Fettmischung enthält, welche die hoch ungesättigten Fettsäuren gamma-Linolensäure, Octadecatetraensäure, di-homo-gamma-Linolensäure, Arachidonsäure, Eicosapentaensäure und Docosahexaensäure aus Fetten tierischen und pflanzlichen Ursprungs in einem Verhältnis der Summe der w6-Fettsäuren (gamma-Linolensäure, di-homo-gamma-Linolensäure und/oder Arachidonsäure) zur Summe der w3-Fettsäuren (Octadecatetraensäure, Eicosapentaensäure und/oder Docosahexaensäure) von 0,1 : 1,0 bis 5,0 : 1,0 enthält (auf das Gewicht bezogen). Der Gehalt der Summe der w6-Fettsäuren (gamma-Linolensäure + di-homo-gamma-Linolensäure + Arachidonsäure) in der Fettmischung beträgt 0,20 bis 2,6 Gew.-%, während der Gehalt der Summe der w3-Fettsäuren (Octadecatetraensäure + Eicosapentaensäure + Docosahexaensäure) 0,05 bis 2,0 Gew.-% beträgt. Sowohl von den w6-Fettsäuren als auch von den w3-Fettsäuren sind jeweils alle drei vorhanden, und zwar vorzugsweise in einer Menge von mindestens 0,01 Gew.-%. Der Gesamtgehalt aller aufgeführten Säuren beträgt 0,25 bis 4,6 Gew.-%. Die Gew-%-Angaben beziehen sich dabei auf das Gesamtgewicht der in der Fettmischung vorhandenen Fettsäuren.

Sofern die Arachidonsäure und die Docosahexaensäure gemeinsam in der erfindungsgemäßen Fettmischung vorhanden sind, liegt das Verhältnis der Arachidonsäure zur Docosahexaensäure außerhalb des Bereiches von 2,0 : 1,0 bis 3,0 : 1,0. Das Verhältnis letzterer Säuren kann dann beispielsweise im Bereich von 0,1 : 1,0 bis 1,99 : 1,0 bzw. von 3,1 : 1,0 bis 4,0 : 1,0 liegen. Zweckmäßigerweise beträgt das Verhältnis von Arachidonsäure zur Docosahexaensäure 0, 1 : 1,0 bis 1,99 : 1,0.

Die eingesetzten Fettsäuren liegen in der erfindungsgemäßen Fettmischung nicht frei vor sondern sind verestert und liegen je nach dem zur Anwendung gebrachten Fett oder Öl in Form von Triglyceriden, Phospholipiden oder Cholesterinestern vor.

Wird ein Neugeborenes und insbesondere Frühgeborenes mit einer erfindungsgemäßen Nahrung gefüttert, dann werden dem Neugeborenen die hoch ungesättigen Polyenfettsäuren gamma-Linolensäure, di-homo-gamma-Linolensäure, Arachidonsäure, Octadecatetraensäure, Eicosapentaensäure und Docosahexaensäure in einer bestimmten Kombination und in einem bestimmten Verhältnis exogen zugeführt.

Die erfindungsgemäß eingesetzte Fettmischung enthält deutlich größere Mengen an physiologisch wichtigen hoch ungesättigten Polyenfettsäuren als die bisher bekannten Fettmischungen. Zudem liegen die Säuren in einer Kombination und in einem Verhältnis vor, die bzw. das den Anforderungen des elongierenden und desaturierenden Enzymsystems des Neugeborenen besser Rechnung trägt.

Da auch der Cholesteringehalt der Säuglingsnahrung neben der Anwesenheit hochungesättigter Polyenfettsäuren für die Entwicklung eines Säuglings von Bedeutung ist, enthält die erfindungsgemäß eingesetzte Fettmischung vorzugsweise außerdem Cholesterin. Cholesterin ist ein Bestandteil der Zellmembranen und damit ebenso wie die hochungesättigten Polyenfettsäuren für deren physiochemische Eigenschaften relevant. Aufgrund des raschen Zellwachstums in der Neonatalphase besteht während dieses Zeitraums ein erhöhter Bedarf an Cholesterin. Exogen zugeführtes Cholesterin ist auch für die Reifung des Lipidstoffwechsels von Bedeutung.

Die erfindungsgemäß eingesetzte Fettmischung mit den oben genannten ungesättigten Fettsäuren und ggf. mit Cholesterin kann man durch Mischen tierischer und pflanzlicher Fette herstellen, indem man die Fette z.B. aufschmilzt, wobei als Grundlage vor allem Fette dicotyler und monocotyler Pflanzen mit einem ausreichenden Gehalt an Öl-, Linol- und α-Linolensäure Verwendung finden. Die gleichzeitige Verwendung von Milchfett erlaubt eine begrenzte Anhebung des Cholesterins. Das Einbringen vom gamma-Linolen-, Octadecatetraen-, di-homo-gamma-Linolen-, Arachidon-, Eicosapentaen- und Docosahexaensäure gelingt durch die Verwendung von Fetten oder Ölen aus bestimmten mono- oder dicotylen Pflanzen, Algen, Pilzen, Mikroorganismen und/oder Fischen. Als Quelle für die genannten Fettsäuren, vor allem auch für Cholesterin, eignen sich ferner Organfette aus Schlachttieren sowie hochraffinierte und desodierte Eieröle und Eilecithinfraktionen.

Die erfindungsgemäß eingesetzte Fettmischung kann man somit herstellen, indem man folgende Fette verwendet:
- Fischöle aus Dorsch, Hai, Hering, Makrele, Rotbarsch sowie entsprechende Fischleberöle
- Eieröl/Eilecithin
- Rinderleber- bzw. Rindernierenfett, Schweineleber- bzw. Schweinenierenfett, Rinderhirnfett, Schweinehirnfett
- Oleo-Oil (Rinderfettfraktion)
- Öle aus mono- und dicotylen Pflanzen (Palmöl, Sojaöl, Baumwollsaatöl, Kokosfett, Maiskeimöl, Sonnenblumenöl, Hybridsonnenblumenöl, Palmkernfett, erucasäurearmes Rapsöl, Öle aus den Pflanzenfamilien der Saxifragaceae, Onagraceae, Boraginaceae und Scrophulariaceae)
- Algenöle (Cyanophyta, Chrysophyta, Dinophyta, Euglenophyta, Chlorophyta, Phaeophyta, Rhodophyta)
- Öle aus Pilzen und Mikroorganismen (SCO = single cell oil).

Die Erstellung der Fettmischung setzt voraus, daß zuvor eine detaillierte Analyse der Fettsäuren der Triglyceride, der Cholesterinester und der Phospholipide in den genannten Ausgangsfetten vorgenommen wird. Dazu werden die Ausgangsfette auf an sich bekannte Weise hydrolysiert, wobei die Fettsäuren aus den genannten Triglyceriden, Cholesterinestern und Phospholipiden freigesetzt werden. Anschließend kann mittels Kapillar-Gaschromatographie und/oder Hochdruckflüssigkeitschromatographie die Art und der Anteil der freigesetzten Fettsäuren analysiert bzw. bestimmt werden. Die im Rahmen der vorliegenden Unterlagen für die verschiedenen Fettsäuren angegebenen Gew.-%-Angaben beziehen sich auf die auf diese Weise (z. B. durch Integration der für die vorhandenen Fettsäuren erhaltenen Peaks eines Gaschromatogramms) ermittelte Gesamtmenge der Fettsäuren. Aus den entsprechenden analytischen Daten kann eine optimale Mischung der Ausgangsfette berechnet werden.

Bei der Lagerung von hochungesättigte Fettsäuren enthaltenden Fettmischungen wurde festgestellt, daß diese Fettmischungen im Laufe der Zeit oxidativ geschädigt werden. Es wird angenommen, daß bei diesem komplexen Prozess der Lipidoxidation primär die hochungesättigten Fettsäuren betroffen sind.

Die erfindungsgemäß eingesetzten Fettmischungen werden daher vorzugsweise mit einem stabilisierenden Antioxydans versetzt. Derartige Antioxydantien sind bekannt. Als bevorzugtes stabilisierendes Antioxydans setzt man α-Tocopherol ein. α-Tocopherol wird dabei vorzugweise in einer Menge von 150 bis 300 ppm, bezogen auf die Fettmischung, eingesetzt.

Weiterhin ist es vorteilhaft, zur Stabilisierung Ascorbylpalmitat zu verwenden, das allein oder zusätzlich zu α-Tocopherol eingesetzt werden kann, wobei die angewendete Menge vorzugsweise im Bereich von 150 bis 300 ppm, bezogen auf die Fettmischung, liegt. Vorzugsweise setzt man somit zwei stabilisierende Antioxidantien ein.

Man kann der Fettmischung auch zusätzlich Lecithin einverleiben, das die zur Anwendung gebrachten Fette stabilisiert. Das Lecithin kommt dabei vorzugsweise in einer Menge von 500 bis 2000 ppm zur Anwendung, bezogen auf die Fettmischung.

Die Fettmischungen kann man herstellen, indem man die einzusetzenden Fette und Öle mischt, insbesondere nachdem man sie durch Erwärmen aufgeschmolzen hat, und, sofern gewünscht, mit einem Emulgator und einem stabilisierenden Antioxydans sowie den weiteren Bestandteilen vermischt.

Es wurde nun überraschend festgestellt, daß man stabile Fettmischungen dann erhält, wenn man die Fettmischung mit einem Emulgator und mindestens einem stabilisierenden Antioxydans versieht und gewisse Bestandteile der Fettmischung in einer bestimmten Reihenfolge zusammengibt.

Gegenstand der Erfindung ist somit auch ein Verfahren zur Herstellung einer stabilisierten Fettmischung zur Herstellung von Nahrungen, insbesondere Säuglingsnahrungen auf Basis von für Nahrungsmittelzwecke geeignete Fetten und Ölen tierischen und Pflanzlichen Ursprungs, wobei in dieser Fettmischung die w6-Fettsäuren Gamma-Linolensäure, Di-Homo-Gamma-Linolensäure und/oder Arachidonsäure 0,20 bis 2,6 Gew.-% und die w3-Fettsäuren Octadecatetraensäure, Eicosapentaensäure und/oder Docosahexaensäure 0,05 bis 2,0 Gew.-% der in der Fettmischung vorhandenen Fettsäuren ausmachen, die genannten w6-Fettsäuren zusammen mit den genannten w3-Fettsäuren 0,25 bis 4,6 Gew.-% der in der Fettmischung vorhandenen Fettsäuren ausmachen und das Gewichtsverhältnis der Summe der genannten w6-Fettsäuren zur Summe der genannten w3-Fettsäuren 0,1 zu 1,0 bis 5,0 zu 1,0 beträgt. Bei dem erfindungsgemäßen Verfahren untersucht man, sofern dies erforderlich ist und die entsprechenden Werte noch nicht vorliegen, die für Nahrungmittelzwecke geeigneten Öle und Fette auf ihren Gehalt an den genannten w3-Fettsäuren und den genannten w6-Fettsäuren und vermengt sie dann in den erforderlichen Anteilen. Dieses Verfahren ist dadurch gekennzeichnet, daß man einen Emulgator und ein stabilisierendes Antioxydans vorlegt und erst dann diejenigen Fette und Öle zugibt, die einen merklichen Anteil an langkettig-hochungesättigten Fettsäuren, insbesondere mehr als 0,5 Gew.-% (bezogen auf den jeweiligen Gesamtfettsäuregehalt des eingesetzten Fetts oder Öls) enthalten. Unter einer langkettig-hochungesättigten Fettsäure wird dabei eine solche mit 20 oder mehr Kohlenstoffatomen sowie mit mehr als einer Doppelbindung verstanden.

Als Emulgator kann man Mono- und/oder Diglyceride oder per se bekannte Emulgatorenmischungen zur Anwendung bringen. Als stabilisierende Antioxydantien setzt man vorzugsweise Ascorbylpalmitat und/oder α-Tocopherol ein.

Zur Durchführung dieses Verfahrens schmilzt man den Emulgator und die Antioxydantien bei etwa 50 °C auf. Zur homogenen Verteilung der Antioxydantien (vor allem Ascorbylpalmitat) kann es erforderlich sein, die Temperatur auf etwa 85 bis 90 °C zu erhöhen.

Zu diesem geschmolzenen Emulgator/Antioxydansgemisch, das man gegebenenfalls mit Stickstoff durchspült, gibt man dann anschließend, nachdem man erforderlichenfalls auf 45 bis 50 °C abgekühlt hat, diejenigen Fette bzw. Öle, die langkettighochungesättigte Fettsäuren enthalten (z.B.: Fischöle, Organfette, Eieröl-Eilecithin, Algenöle sowie Öle aus Pilzen und Mikroorganismen) zu.

Nach einer besonders bevorzugten Ausführungsform verfährt man wie folgt:
1. Man schmilzt kurzkettige Fette wie Kokos-, Palmkernfett und/oder Butterfett bei insbesondere etwa 45 bis 50 °C auf. Die so erhaltene Schmelze legt man in einem rührfähigen Behälter zur Lösungsvermittlung der stabilisierenden Antioxydantien (z.B. Ascorbylpalmitat/α-Tocopherol) vor.
2. Man schmilzt den Emulgator und die Antioxydantien bei insbesondere etwa 50 °C separat von den kurzkettigen Fetten auf, wobei der Emulgator insbesondere zur Aufnahme der Antioxydantien dient. Zur homogenen Verteilung der Antioxydantien (vor allem Ascorbylpalmitat) kann es auch erforderlich sein, die Temperatur auf etwa 85 bis 90 °C zu erhöhen. Um die Löslichkeit der Antioxydantien zu verbessern, kann man den Emulgator zusammen mit den Antioxydantien auch in einer Vorlage von Kokos-/Palmkernfett bei etwa 85 bis 90 °C aufschmelzen.
3. Man gibt das Emulgator/Antioxydansgemisch bzw. das Gemisch aus Emulgator/Antioxydans und Kokos-/Palmkernfett zu der unter 1. genannten Vorlage aus aufgeschmolzenen kurzkettigen Fetten.
4. Man durchspült die Mischung mit Stickstoff.
5. Man kühlt die Mischung erforderlichenfalls auf 45 bis 50 °C ab und gibt dann Fette bzw. Öle zu, die langkettighochungesättigte Fettsäuren enthalten.
6. Anschließend gibt man die übrigen Fette bzw. Fettmischungskomponenten (z.B.: Öle und mono- und dicotyler Pflanzen) zu.

Die erfindungsgemäß eingesetzte Fettmischung und insbesondere die nach dem erfindungsgemäßen Verfahren hergestellte Fettmischung bewahrt man vorzugsweise unter Stickstoff sowie unter Vermeidung von Kontakt mit Metallen auf.

Es wurde überraschend festgestelt, daß die mit Hilfe des erfindungsgemäßen Verfahrens hergestellten Fettmischungen wesentlich länger stabil sind als Fettmischungen, bei denen z.B. das stabilisierende Antioxydans erst nach dem Aufschmelzen und Vermengen der langkettig-hochungesättigten Fettsäuren mit den übrigen Bestandteilen zugegeben wurde.

Die nachstehend beschriebenen Fettmischungen wurden gemäß dem erfindungsgemäßen Verfahren hergestellt:

### Fettmischungsbeispiel 1:

2,5 % Antioxydans+Emulgator
- 1,0 % Borretschöl
- 14,0 % Eieröl-Eilecithin
- 15,0 % Hybridsonnenblumenöl
- 21,5 % Palmöl
- 4,0 % Kokos-/Palmkernfett
- 10,0 % Sojaöl
- 32,0 % Butterfett

### Fettmischungsbeispiel 2:

- 2,5 % Antioxydans+Emulgator
- 1,0 % Borretschöl
- 16,0 % Eieröl-Eilezithin
- 40,0 % Palmöl
- 13,0 % Kokos-/Palmkernfett
- 15,5 % Olivenöl
- 12,0 % Sojaöl

### Fettmischungsbeispiel 3:

- 2,5 % Antioxydans+Emulgator
- 14,0 % Hybridsonnenblumenöl
- 38,0 % Butterfett
- 23,5 % Palmöl
- 6,0 % Kokos-/Palmkernfett
- 4,0 % Fischöl
- 12,0 % Sojaöl

Die %-Angaben beziehen sich, sofern nichts anderes angegeben ist, auf das Gewicht.

Fettsäurezusammensetzung (in Gew.-%) der drei Fettmischungsbeispiele

| | | Bsp.1 | Bsp.2 |
|---|---|---|---|
| Laurinsäure | C12-0 | 3,30 | 7,17 |
| Myristinsäure | C14-0 | 4,91 | 3,02 |
| Palmitinsäure | C16-0 | 24,95 | 23,95 |
| Stearinsäure | C18-0 | 6,82 | 4,17 |
| Ölsäure | C18:1w9 | 38,30 | 39,18 |
| Linolsäure | C18:2w6 | 13,04 | 16,55 |
| gamma-Linolensäure | C18:3w6 | 0,29 | 0,30 |
| α-Linolensäure | C18:3w3 | 1,22 | 1,29 |
| Octadecatetraensäure | C18:4w3 | 0,01 | 0,01 |
| di-homo-gamma-Linolensäure | C20:3w6 | 0,03 | 0,03 |
| Arachidonsäure | C20:4w6 | 0,42 | 0,42 |
| Eicosapentaensäure | C20:5w3 | 0,08 | 0,10 |
| Docosahexaensäure | C22:6w3 | 0,22 | 0,25 |
| P/S -Quotient | | 0,37 | 0,48 |
| 18:3w6+20:3w6+20:4w6/18:4w3+20:5w3+22:6w3-Quotient | | 2,68 | 2,82 |
| Cholesterin (mg/g Fett) | | 6,37 | 6,40 |
| 20:4w6/22:6w3-Verhältnis | | 1,92 | 1,67 |

Die im Rahmen der vorliegenden Unterlagen verwendete Kurzbezeichnung bzw. Nomenklatur für die erfindungsgemäß eingesetzten Fettsäuren ist beispielsweise näher erläutert in "Lipid Analysis" von William W. Christie, Pergamon Press, 1973. Demnach kann zum Beispiel die Ölsäure mit C18:1w9 bezeichnet werden; der Ausdruck C18 gibt die Anzahl der Kohlenstoffatome wieder, während die Zahl (hier 1) nach dem Doppelpunkt (:) die Anzahl der Doppelbindungen anzeigt. Die Bezeichnung w9 bei der Ölsäure zeigt die Zahl der Kohlenstoffatome von der letzten Doppelbindung bis zur terminalen Methylgruppe an.

Die beschriebene Fettmischung ist für die Herstellung einer Säuglings- und Frühgeborenennahrung geeignet. Die Erfindung betrifft somit auch die Verwendung der beschriebenen Fettmischung für die Zubereitung einer Säuglingsnahrung. Die mit dieser Fettmischung herzustellende Säuglingsnahrung auf der Basis pflanzlichen oder tierischen Eiweißes liegt in Form eines sofort löslichen Pulvers oder einer Flüssigmilch vor. Das flüssige Produkt wird in üblicher Weise sterilisiert oder bei Ultrahochtemperatur (UHT) sterilisiert und aseptisch abgefüllt.

Die Substanzen, die hierbei eingesetzt werden, sind beispielhaft folgende:
a) Demineralisiertes Molkenpulver
b) Milchzucker
c) Magermilch, Flüssig (8,5 %)
d) Mineralsalze
e) Vitamine
f) erfindungsgemäße Fettmischung
Die folgenden Tabellen zeigen die typische Zusammensetzung einer flüssigen Säuglingsnahrung, die unter Verwendung der Fettmischung aus obigem Beispiel hergestellt wurde.

**Tabelle I**

| | |
|---|---|
| Wassergehalt | 87,4 % |
| Proteine | 1,5 % |
| Lipide | 3,6 % |
| Kohlenhydrate | 7,2 % |
| Mineralsalze | 0,26 % |
| Brennwert | 285 kJ/100 ml |
| Cholesterin | 15,5 mg/100 ml |

**Tabelle II**

| Fettsäurezusammensetzung (in Gew.-%) | | |
|---|---|---|
| Laurinsäure | C12 | 3,30 |
| Myristinsäure | C14 | 4,91 |
| Palmitinsäure | C16 | 24,95 |
| Stearinsäure | C18 | 6,82 |
| Ölsäure | C18:1w9 | 38,30 |
| Linolsäure | C18:2w6 | 13,04 |
| gamma-Linolensäure | C18:3w6 | 0,29 |
| α-Linolensäure | C18:3w3 | 1,22 |
| Octadecatetraensäure | C18:4w3 | 0,01 |
| di-homo-gamma-Linolensäure | C20:3w6 | 0,03 |
| Arachidonsäure | C20:4w6 | 0,42 |
| Eicosapentaensäure | C20:5w3 | 0,08 |
| Docosahexaensäure | C22:6w3 | 0,22 |

**Tabelle III**

| (Gehalt an Mineralsalzen (mg/100 ml) | |
|---|---|
| Natrium | 25 |
| Kalium | 50 |
| Calcium | 60 |
| Magnesium | 6 |
| Phosphor | 40 |
| Chlorid | 20 |

**Tabelle IV**

| Vitamine (/100 ml) | |
|---|---|
| Vitamin A | 201 I.E. |
| Vitamin B1 | 0,04 mg |
| Vitamin B2 | 0,05 mg |
| Vitamin B6 | 0,03 mg |
| Vitamin B12 | 0,15 mg |
| Vitamin C | 5,97 mg |
| Vitamin D3 | 40,2 I.E. |
| Vitamin E | 0,61 mg |
| Biotin | 1,12 µg |
| Ca-D-Pantothenat | 0,40 mg |
| Folsäure | 10,13 mg |
| Niacinamid | 0,40 mg |

Die Zusammensetzung der Standardauflösung (13 g Pulver/90 ml Wasser) des pulverförmigen Produktes ist die gleiche wie die des flüssigen Produktes.

Vergleich der Fettsäurezusammensetzung (in Gew.-%) und des Cholesteringehaltes (in mg/100 ml) von Frauenmilch, herkömmlicher und erfindungsgemäßer Formelnahrung

| Fettsäuren | Humanmilch | herkömmlich | erfindungsgemäß | |
|---|---|---|---|---|
| C12 | 5,5 | 5,2 | 3,30 | 7,17 |
| C14 | 7,2 | 3,8 | 4,91 | 3,02 |
| C16 | 23,1 | 28,1 | 24,95 | 23,94 |
| C18 | 8,4 | 8,4 | 6,82 | 4,17 |
| C18:1w9 | 35,0 | 33,2 | 38,30 | 39,18 |
| C18:2w6 | 11,8 | 12,6 | 13,04 | 16,55 |
| C18:3w6 | 0,2 | ND | 0,29 | 0,30 |
| C18:3w3 | 0,7 | 0,8 | 1,22 | 1,29 |
| C18:4w3 | ND | ND | 0,01 | 0,01 |
| C20:3w6 | 0,4 | ND | 0,03 | 0,03 |
| C20:4w6 | 0,4 | ND | 0,42 | 0,42 |
| C20:5w3 | SP | ND | 0,08 | 0,10 |
| C22:5w3 | SP | ND | SP | SP |
| C22:6w3 | 0,2 | ND | 0,22 | 0,25 |
| P/S -Quotient | 0,31 | 0,29 | 0,37 | 0,48 |
| 18:3w6+20:3w6+20:4w6/18:4w3+20:5w3+22:6w3-Quotient | 3,3 | - | 2,68 | 2,82 |
| Cholesterin | 5-20,0 | 4,0 | 22,93 | 23,04 |
| ND = nicht nachweisbar SP = Spuren (kleiner 0,1 %) | | | | |

## Patentansprüche

1. Formelnahrung enthaltend eine Fettmischung auf Basis von für Nahrungsmittelzwecke geeigneten Fetten und Ölen tierischen und pflanzlichen Ursprungs,
dadurch **gekennzeichnet,**
daß die w6-Fettsäuren gamma-Linolensäure, di-homo-gamma-Linolensäure und Arachidonsäure 0,20 bis 2,6 Gew.-% und die w3-Fettsäuren Octadecatetraensäure, Eicosapentaensäure und Docosahexaensäure 0,05 bis 2,0 Gew.-% der in der Fettmischung vorhandenen Fettsäuren ausmachen, wobei alle der genannten w3-Fettsäuren und der w6-Fettsäuren vorhanden sind,
daß die genannten w6-Fettsäuren zusammen mit den genannten w3-Fettsäuren 0,25 bis 4,6 Gew.-% der in der Fettmischung vorhandenen Fettsäuren ausmachen und daß das Gewichtsverhältnis der Summe der genannten w6-Fettsäuren zur Summe der genannten w3-Fettsäuren 0,1 : 1,0 bis 5,0 : 1 beträgt,
wobei die Fettmischung die Arachidonsäure und die Docosahexaensäure nicht in solchen Mengen enthält, daß das Gewichtsverhältnis von Arachidonsäure zu Docosahexaensäure 2,0 : 1 bis 3,0 : 1 beträgt.

2. Formelnahrung nach Anspruch 1,
dadurch **gekennzeichnet,**
daß die Fettmischung außerdem Cholesterin aus Fetten tierischen oder pflanzlichen Ursprungs enthält, insbesondere in einer Menge von 0,5 bis 20 mg/g Fettmischung.

3. Formelnahrung nach Anspruch 1 oder 2,
dadurch **gekennzeichnet,**
daß die Fettmischung außerdem einen Emulgator oder eine Emulgatorenmischung und mindestens ein stabilisierendes Antioxydans enthält.

4. Formelnahrung nach Anspruch 3,
dadurch **gekennzeichnet,**
daß die Fettmischung als Antioxydans Tocopherol, insbesondere in einer Menge von 150 bis 300 ppm, und/oder Ascorbylpalmitat, ins-besondere in einer Menge von 150 bis 300 ppm, enthält, bezogen auf die Fettmischung.

5. Formelnahrung nach einem der Ansprüche 1 bis 4,
dadurch **gekennzeichnet,**
daß die Fettmischung außerdem Lecithin, insbesondere in einer Menge von 500 bis 2000 ppm (bezogen auf die Fettmischung), enthält.

6. Verfahren zur Herstellung einer stabilisierten Fettmischung zur Herstellung von Formelnahrung auf Basis von für Nahrungsmittelzwecke geeigneten Fetten und Ölen tierischen und pflanzlichen Ursprungs, wobei die w6-Fettsäuren gamma-Linolensäure, di-homo-gamma-Linolensäure und Arachidonsäure 0,20 bis 2,6 Gew.-% und die w3-Fettsäuren Octadecatetraensäure, Eicosapentaensäure und Docosahexaensäure 0,05 bis 2,0 Gew.-% der in der Fettmischung vorhandenen Fettsäuren ausmachen,
die genannten w6-Fettsäuren zusammen mit den genannten w3-Fettsäuren 0,25 bis 4,6 Gew.-% der in der Fettmischung vorhandenen Fettsäuren ausmachen und
das Gewichtsverhältnis der Summe der genannten w6-Fettsäuren zur Summe der genannten w3-Fettsäuren 0,1 : 1,0 bis 5,0 : 1,0 beträgt,
wobei man die Öle und Fette erforderlichenfalls auf ihren Gehalt an den genannten w3-Fettsäuren und den w6-Fettsäuren untersucht und sie dann in solchen Anteilen miteinander sowie mit mindestens einem stabilisierenden Antioxydans und einem Emulgator sowie gegebenenfalls den weiteren Bestandteilen vermengt, daß die oben angegebenen Bedingungen erfüllt sind,
dadurch **gekennzeichnet,**
daß man den Emulgator und das stabilisierende Antioxydans vorlegt und erst dann diejenigen Fette und Öle zugibt, die langkettig-hochungesättigte Fettsäuren mit 20 oder mehr C-Atomen, insbesondere mehr als 0,5 Gew.-% (bezogen auf den jeweiligen Gesamtfettsäuregehalt), enthalten.

7. Verfahren nach Anspruch 6,
dadurch **gekennzeichnet,**
daß man
a) kurzkettige Fette, beipielsweise Kokos-/Palmkernfett und/oder Butterfett aufschmilzt,
b) den Emulgator und das stabilisierende Antioxydans separat von den Fetten in a) aufschmilzt,
c) das in Stufe b) erhaltene Gemisch zu den gemäß Stufe a) aufgeschmolzenen Fetten gibt,
d) die erhaltene Mischung erforderlichenfalls abkühlt, insbesondere auf 45 - 50 °C, und dann die Fette zugibt, die langkettig-hochungesättigten Fettsäuren enthalten,und anschließend
e) die übrigen Fette bzw. Fettmischungskomponenten einbringt.

8. Verfahren nach Anspruch 7,
dadurch **gekennzeichnet,**
daß man in Stufe b) den Emulgator und das stabilisierende Antioxydans auf einer Vorlage von Kokos-/Palmkernfett aufschmilzt und/oder daß man die in Stufe c) und e) erhaltene Mischung mit Stickstoff durchspült.

9. Verfahren nach mindestens einem der Ansprüche 6 bis 8,
dadurch **gekennzeichnet,**
daß man als für Nahrungsmittelzwecke geeignete Öle und Fette Fischöle, Eieröl/Eierlecithin, Fettfraktionen des Rinder- und Schweinehirns sowie Organfett (Niere, Leber von Rindern oder Schweinen), Oleooil, Pflanzenöle dicotyler und monocotyler Pflanzen, Öle aus den Pflanzenfamilien, Saxifragaceae, Onagraceae, Boraginaceae und Scrophulariaceae, Algenöle (Cyanophyta, Chrysophyta, Dinophyta, Euglenophyta, Chlorophyta, Phaeophyta, Rhodophyta) und/oder Öle aus Pilzen und Mikroorganismen einsetzt.

10. Verwendung der in der Formelnahrung nach einem der Ansprüche 1 bis 5 beschriebenen Fettmischung oder der nach dem Verfahren gemäß einem der Ansprüche 6 bis 9 erhältlichen Fettmischung für die Zubereitung von Säuglings- und Frühgeborenennahrungen.

## Claims

1. Formula food containing a fat mixture based on fats and oils of animal and plant origin suitable for food purposes,
characterised in that the w-6 fatty acids gamma-linolenic acid, di-homo-gamma-linolenic acid and arachidic acid make up 0.20 to 2.6 % by weight, and the w3-fatty acids octadecatetranoic acid, eicosapentanoic acid and docosahexanoic acid make up 0.05 to 2.0 % by weight of the fatty acids present in the fat mixture, where all of the said w3-fatty acids and w6-fatty acids are present,
that the said w6-fatty acids together with the said w3-fatty acids make up 0.25 to 4.6 % by weight of the fatty acids present in the fat mixture and
that the weight ratio of the sum of the said w6-fatty acids to the sum of the said w3-fatty acids amounts to 0.1 to 1.0 to 5.0 to 1.0
wherein the arachidic acid and docosahexanoic acid are not contained in the fat mixture in such quantities that the weight ratio of arachidic acid to docosahexanoic acid amounts to 2.0 : 1 to 3.0 : 1.

2. Formula food according to claim 1
characterised in that the fat mixture contains in addition cholesterol from fats of animal or plant origin, more particularly in a quantity of 0.5 to 20 mg/g fat mixture.

3. Formula food according to claim 1 or 2
characterised in that the fat mixture also contains an emulsifier or an emulsifier mixture and at least one stabilizing antioxidant.

4. Formula food according to claim 3
characterised in that the fat mixture contains as antioxidant tocopherol, more particularly in a quantity of 150 to 300 ppm, and/or ascorbyl palmitate, more particularly in a quantity of 150 to 300 ppm, in relation to the fat mixture.

5. Formula food according to one of claims 1 to 4
characterised in that the fat mixture contains also lecithin, more particularly in a quantity of 500 to 2000 ppm (in relation to the fat mixture).

6. Process for preparing a stabilized fat mixture for manufacturing formula food based on fats and oils of animal and plant origin suitable for food purposes wherein
the w-6 fatty acids gamma-linolenic acid, di-homo-gamma-linolenic acid and arachidic acid make up 0.20 to 2.6 % by weight, and the w3-fatty acids octadecatetranoic acid, eicosapentanoic acid and docosahexanoic acid make up 0.05 to 2.0 % by weight of the fatty acids present in the fat mixture, the said w6-fatty acids together with the said w3-fatty acids make up 0.25 to 4.6 % by weight of the fatty acids present in the fat mixture and
the weight ratio of the sum of the said w6-fatty acids to the sum of the said w3-fatty acids amounts to 0.1 : 1.0 to 5.0 : 1.0,
wherein the oils and fats are investigated where necessary for their content of the said w3-fatty acids and the w6-fatty acids and they are then mixed together in such proportions and with at least one stabilizing antioxidant and emulsifier as well as where applicable with the additional ingredients so that the above mentioned conditions are fulfilled,
characterised in that the emulsifier and stabilizing antioxidant are preliminary mixed and only then are those fats and oils added which contain long-chain highly unsaturated fatty acids with 20 or more C-atoms, more particularly more than 0.5% by weight (in relation to the relevant overall fatty acid content).

7. Process according to claim 6
characterised in that
a) short-chain fats, for example coconut/palm kernel oil and/or butter fat are melted down
b) the emulsifier and the stabilizing antioxidant are melted separately from the fats in a)
c) the mixture obtained in stage b) is added to the fats melted according to stage a)
d) the mixture thus obtained is cooled down where necessary, more particularly to 45 - 50 °C, and then the fats containing the long-chain highly unsaturated fatty acids are added and finally
e) the remaining fats or fat mixture ingredients are added.

8. Process according to claim 7
characterised in that in stage b) the emulsifier and the stabilizing antioxidant are melted in a preliminary mix of coconut/palm kernel oil and/or that the mixture obtained in stages c) and e) is rinsed through with nitrogen.

9. Process according to at least one of claims 6 to 8
characterised in that the oils and fats which are suitable for food purposes are fish oils, egg yoke oils/egg lecithin, fat fractions of beef and pig brains as well as organ fat (beef or pig kidney, liver), oleo-oil, plant oil of mono- and dicotyl plants, oils from the plant families saxifragaceae, onagraceae, boraginaceae and scrophulariaceae) algae oils (cyanophyta, chrysophyta, dinophyta, euglenophyta, chlorophyta, phaeophyta, rhodophyta) and/or oils from fungus and micro organisms.

10. Use of the fat mixture described in the formula food according to one of claims 1 to 5 or of the fat mixture which can be obtained from the process according to one of claims 6 to 9 for the preparation of infant and premature baby foods.

## Revendications

1. Aliment maternisé contenant un mélange de corps gras à base de graisses et d'huiles d'origine animale ou végétale, appropriées à des fins alimentaires, caractérisé en ce que les acides gras (n-6), à savoir l'acide γ-linolénique, l'acide di-homo-γ-linolénique et l'acide arachidonique, constituent de 0,20 à 2,6% en masse et les acides gras (n-3), à savoir l'acide octadécatétraénoïque, l'acide éicosapenténoïque et l'acide docosahexénoïque, constituent de 0,05 à 2,0% en masse des acides gras présents dans le mélange de corps gras, tous les acides gras (n-3) cités et les acides gras (n-6) étant présents, en ce que les acides gras (n-6) cités constituent avec lesdits acides gras (n-3) de 0,25 à 4,6% en masse des acides gras présents dans le mélange de corps gras et en ce que le rapport massique de la somme des acides gras (n-6) cités à la somme des acides gras (n-3) cités est compris entre 0,1 : 1,0 et 5,0 : 1, étant entendu que le mélange de corps gras ne contient pas l'acide arachidonique et l'acide docosahexénoïque en des quantités telles que le rapport massique de l'acide arachidonique à l'acide docosahexénoïque est compris entre 2,0 : 1 et 3,0 : 1.

2. Aliment maternisé selon la revendication 1, caractérisé en ce que le mélange de corps gras contient eu outre du cholestérol provenant de graisses d'origine animale ou végétale, surtout en une quantité comprise entre 0,5 et 20 mg/g de mélange de corps gras.

3. Aliment matérnisé selon la revendication 1 ou 2, caractérisé en ce que le mélange de corps gras contient en outre un émulsifiant ou un mélange d'émulsifiants et au moins un antioxydant stabilisant.

4. Aliment maternisé selon la revendication 3, caractérisé en ce que le mélange de corps gras contient, en tant qu'antioxydant, du tocophérol, surtout en une quantité comprise entre 150 et 300 ppm, et/ou du palmitate d'ascorbyle, surtout en une quantité comprise entre 150 et 300 ppm, par rapport au mélange de corps gras.

5. Aliment maternisé selon l'une quelconque des revendications 1 à 4, caractérisé en ce que le mélange de corps gras contient en outre de la lécithine, surtout en une quantité comprise entre 500 et 2000 ppm (par rapport au mélange de corps gras).

6. Procédé de préparation d'un mélange de corps gras stabilisé pour produire un aliment maternisé à base de graisses et d'huiles d'origine animale et végétale, appropriées à des fins alimentaires, les acides gras (n-6), à savoir l'acide γ-linolénique, l'acide di-homo-γ linolénique et l'acide arachidonique constituant de 0,20 à 2,6% en masse et les acides gras (n-3), à savoir l'acide octadécatétraénoïque, l'acide éicosapenténoïque et l'acide docosahexénoïque, constituant de 0,05 à 2,0% en masse des acides présents dans le mélange de corps gras, les acides gras (n-6) cités constituant avec les acides gras (n-3) cités de 0,25 à 4,6% en masse des acides gras présents dans le mélange de corps gras et le rapport massique de la somme des acides gras (n-6) cités à la somme des acides gras (n-3) cités étant compris entre 0,1 : 1,0 et 5,0 : 1,0, étant entendu qu'on analyse au besoin la teneur en acides gras (n-3) cités et en acides gras (n-6) des huiles et des graisses et qu'on les mélange ensuite entre elles et avec au moins un antioxydant stabilisant et un émulsifiant ainsi que, le cas échéant, avec les autres composants, dans des proportions telles que les conditions données ci-dessus sont remplies, caractérisé en ce qu'on introduit l'émulsifiant et l'antioxydant stabilisant et qu'on n'ajoute qu'ensuite les graisses et huiles qui contiennent les acides gras à chaîne longue, très insaturés, ayant au moins 20 atomes de carbone, surtout plus de 0,5% en masse (par rapport à la teneur totale correspondante en acides gras).

7. Procédé selon la revendication 6, caractérisé en ce que :
a) on fait fondre des graisses à chaîne courte, par exemple beurre de coco/huile de palmiste et/ou graisse de beurre,
b) on fait fondre, séparément des graisses de l'étape a), l'émulsifiant et l'anti-oxydant stabilisant,
c) on ajoute le mélange obtenu au cours de l'étape b) aux graisses fondues selon l'étape a),
d) on refroidit au besoin le mélange obtenu, surtout à 45-50°C, puis on ajoute les graisses qui contiennent les acides gras à longue chaîne, très insaturés et, ensuite
e) on introduit le reste des graisses ou des composants du mélange de corps gras.

8. Procédé selon la revendication 7, caractérisé en ce qu'on fait fondre au cours de l'étape b) l'émulsifiant et l'antioxydant stabilisant sur une couche préalablement introduite de beurre de coco/huile de palmiste et/ou en ce qu'on rince à l'azote le mélange obtenu au cours des étapes c) et e).

9. Procédé selon au moins l'une quelconque des revendications 6 à 8, caractérisé en ce qu'on utilise, en tant qu'huiles et graisses appropriées à des fins alimentaires, des huiles de poisson, de l'huile de jaune d'oeuf/lécithine d'oeuf, des fractions lipidiques de matière cérébrale de boeuf et de porc ainsi que des graisses d'organes (rein, foie de boeufs ou de porcs), de l'Oleo Oil, des huiles végétales de dicotylédones et de monocotylédones, des huiles provenant de familles végétales, à savoir Saxifragées, Onagrariées, Borraginées et Scrofularinées, des huiles d'algues (Cyanophycée, Clurysophycée, Dinophycée, Euglenophycée, Chlorophycée, Phaeophycée, Rhodophycée) et/ou des huiles provenant de champignons et de micro-organismes.

10. Utilisation du mélange de corps gras décrit dans l'aliment maternisé selon l'une quelconque des revendications 1 à 5 ou du mélange de corps gras qu'il est possible d'obtenir d'après le procédé selon l'une quelconque des revendications 6 à 9 pour la préparation d'aliments pour bébés et pour prématurés.
